Europäisches Patentamt

European Patent Office

Office européen des brevets

Veröffentlichungsnummer: **0 284 956**

**A2**

## EUROPÄISCHE PATENTANMELDUNG

Anmeldenummer: 88104549.6

Anmeldetag: 22.03.88

Int. Cl.⁴ **B66D 1/16** , B66D 5/26 , B66D 1/44 , //F16D25/14

Priorität: 28.03.87 DE 3710253

Veröffentlichungstag der Anmeldung:
05.10.88 Patentblatt 88/40

Benannte Vertragsstaaten:
**DE FR GB NL**

Anmelder: **NORDMEYER KG**
**Werner Nordmeyer-Strasse 3**
**D-3150 Peine(DE)**

Erfinder: **Grützmacher, Hans-Georg**
**Horstmannstrasse 69**
**D-3152 Ilsede 1(DE)**

Vertreter: **Döring, Rudolf, Dr.-Ing.**
**Patentanwälte Dr.-Ing. R. Döring Dipl.-Phys.**
**Dr. J. Fricke Jasperallee 1a**
**D-3300 Braunschweig(DE)**

Seilwinde für wahlweisen Hub-, Senk- und zyklischen Freifall-Schlagbetrieb.

Die Seilwinde (17) für Hub-, Senk-und zyklischen Freifall-Schlagbetrieb ist auf einfache Weise und lediglich durch Umlegen eines Schalters auf den Freifall-Schlagbetrieb umschaltbar. Über eine zur Vorspannung des Seiles (3) dienende Tänzeranordnung (7 und 8 bis 10) wird dabei während des Freifall-Schlagbetriebes die Seilspannung abgetastet und jedesmal dann, wenn die Seilspannung nach Beendigung eines Freifall-Schlages den geringsten Spannungswert erlangt, ein Impulsschalter (14) betätigt, über den das Anheben des Freifallgewichtes (4) durch die Seilwinde (17) ausgelöst wird. Durch zeitliche Festlegung der Dauer des Anhebevorganges wird die Fallhöhe (20) bestimmt und automatisch der freie Fall des Gewichtes ausgelöst, während am Ende des freien Falles durch die auftretende Entspannung des Seiles das erneute Anheben des Gewichtes automatisch ausgelöst wird.

Fig 1

## Seilwinde für wahlweisen Hub-, Senk-und zyklischen Freifall-Schlagbetrieb

Die Erfindung betrifft eine Seilwinde für wahlweisen Hub-, Senk-und zyklischen Freifall-Schlagbetrieb mit den Merkmalen des Oberbegriffes des Anspruches 1.

Es sind derartige Seilwinden z.B. für fahrbare Bohrgeräte zu Bodenuntersuchungen oder Bodenprobeentnahmen bekannt. Der Seilwinde sind eine Bremse und eine Kupplung zugeordnet, über die der Hebe-und Senkbetrieb gesteuert wird. Ferner ist es bekannt, bei einer solchen Seilwinde eine zusätzliche Anordnung vorzusehen, um durch Anhängen eines Gewichtes an das Seilende die vorhandene Vorrichtung auch für den Freifall-Schlagbetrieb vorzusehen. Zu diesem Zweck ist ein Kurbelarm und ein besonderer Antrieb für den Kurbelarm vorgesehen, durch die ein Trum des Seiles periodisch aus der Strecklage ausgelenkt und wieder freigegeben wird. Bei der Auslenkung des Seiles aus der Strecklage wird das Fallgewicht angehoben und kann danach unter Streckung des Seilabschnittes wieder um ein bestimmtes Ausmaß abfallen.

Diese bekannte Anordnung ist relativ aufwendig, da sie eine die Seilwinde ergänzende zusätzliche Vorrichtung und einen eigenen Antrieb erfordert, die nur für den Freifall-Schlagbetrieb benötigt wird. Auch wird das Seil durch den wiederholten Angriff des Kurbelarmes relativ stark beansprucht. Ferner ist während des Freifall-Schlagbetriebes ein manuelles feinfühliges Steuern der Seillänge erforderlich, um das Eindringen des Gewichtes in den Untergrund zu ermöglichen, jedoch Hubverlust, Abspringen oder Überwickeln durch zu loses Seil zu vermeiden. Durch den Raumbedarf des Kurbelweges sind der Hubhöhe Grenzen gesetzt und wegen der festen Kurbelexzentrizität nur Hubverkürzung durch geänderte Seilumlenkung möglich. Diese kann nur bei abgeschaltetem Schlagbetrieb vorgenommen werden.

Es ist Aufgabe der Erfindung, eine Seilwinde mit den Merkmalen des Oberbegriffes so weiterzubilden, daß die aufgezeigten Schwierigkeiten und Probleme überwunden werden und ein vorhandener Seilwindenantrieb wahlweise für den Freifall-Schlagbetrieb eingesetzt werden kann, und zwar auf relativ einfache Weise.

Diese Aufgabe wird durch die Merkmale des Anspruches 1 gelöst.

Bei dieser Anordnung wird der Antrieb der Seilwinde dazu benutzt, um das Fallgewicht über die gewünschte, vorzugsweise auch während des Freifall-Schlagbetriebes verstellbare, Fallhöhe anzuheben und wieder freizugeben, wobei der Anhebevorgang automatisch durch den auf die Seilspannung ansprechenden Fühler ausgelöst wird und die Fallhöhe durch die Zeitspanne bestimmt wird, für die der Antrieb der Seilwinde eingeschaltet wird. Die Anordnung ist einfach und bedarf keines besonderen Antriebes. Die Steuerung der Seillänge erfolgt selbsttätig, das Umschalten von der Fall-auf die Hubbewegung und umgekehrt läuft automatisch ab. Die Anordnung arbeitet schonend, da an dem Seil lediglich der übliche Seilwindenantrieb angreift, so daß das Seil keiner zusätzlichen Belastung ausgesetzt ist.

Der Fühler kann zweckmäßigerweise als eine zwischen der Seiltrommel und einer Seilumlenkrolle angeordnete Tänzerrolle ausgebildet sein, deren Tänzerbahn ein durch die Tänzerrolle in eine vorbestimmte Stellung betätigbarer Impulsschalter zum Betätigen der Schaltkupplung und zur Auslösung des Zeitgebers zugeordnet ist. Diese Tänzerrolle kann eine übliche Seilspannrolle sein, die freibeweglich in den Seilzug eingebaut ist und zweckmäßigerweise unter einer vorbestimmten Federvorspannung steht. Die Tänzerrolle ist dabei zweckmäßigerweise über eine Schlittenführung reibungsarm und zuverlässig geführt, wobei vorzugsweise stoßdämpfende Anschläge die Hubbewegung der Tänzeranordnung nach oben und nach unten begrenzen.

Weitere Einzelheiten und bevorzugte Ausbildungsformen ergeben sich aus den Unteransprüchen.

Die Erfindung wird nachfolgend anhand schematischer Zeichnungen an einem Ausführungsbeispiel näher erläutert.

Es zeigen:

Fig. 1 in perspektivischer Ansicht eine Seilwinde gemäß der Erfindung und

Fig. 2 die Seiltrommel mit zugehörigen Steuerelementen und dem zugehörigen Steuerkreis.

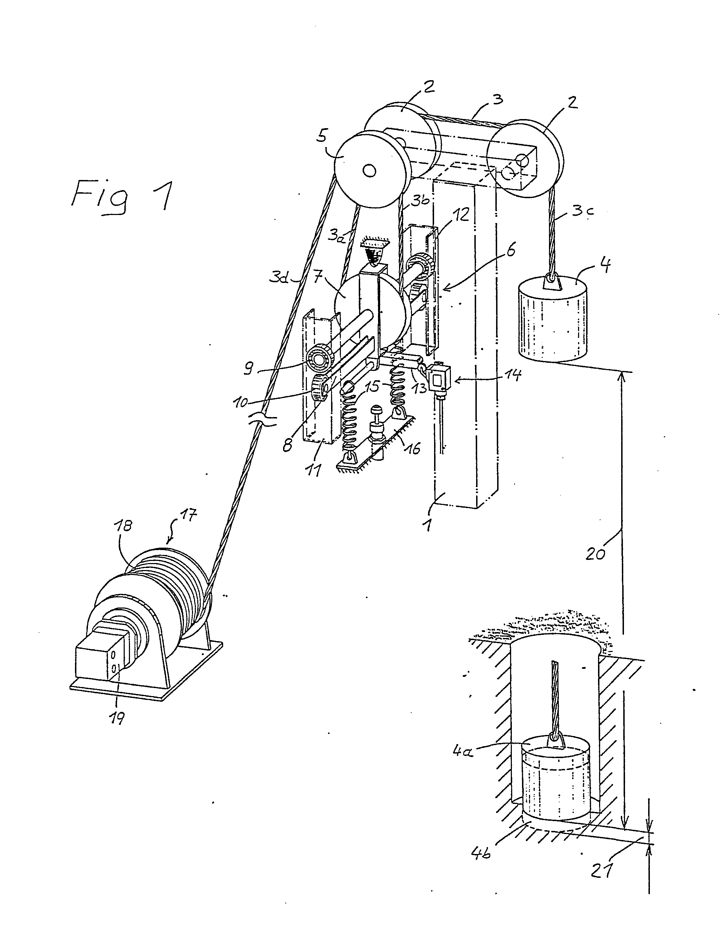

Fig. 1 zeigt eine typische Seilwinde, wie sie für bewegliche Bohrgeräte oder Bodenprobenentnahmegeräte üblich ist.

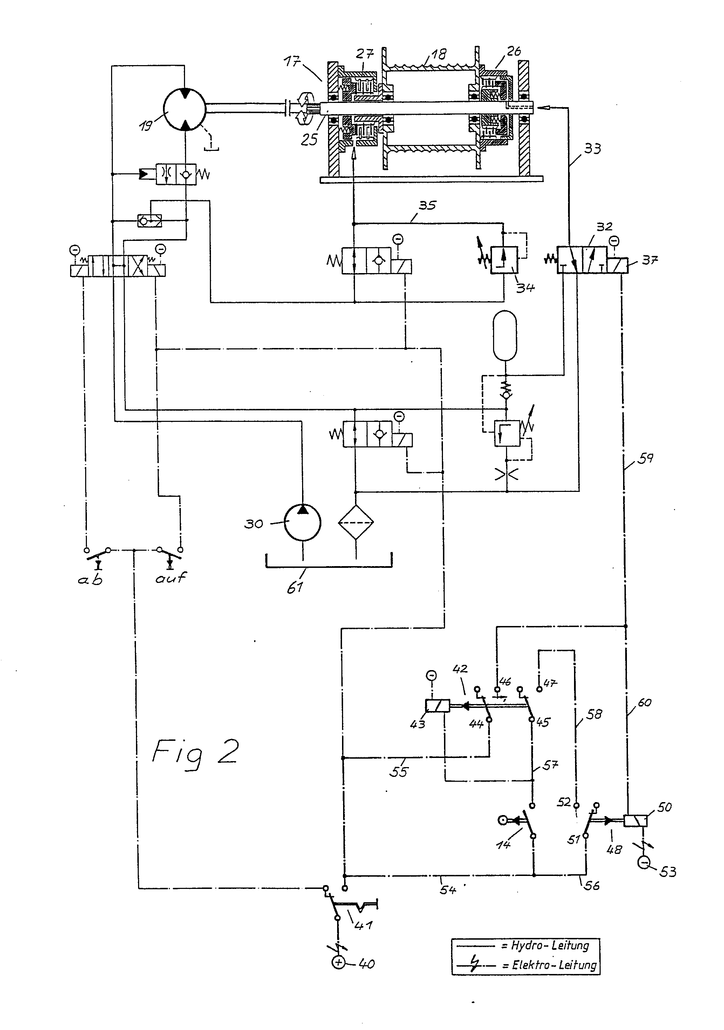

Am oberen Ende eines Mastes 1, der lediglich strichpunktiert angedeutet ist, sind zwei Umlenkrollen 2 freidrehbar gelagert, über die das Seil 3 des Seilzuges geführt ist. Von der hinteren Umlenkrolle 2 läuft das Seil über eine Tänzerrolle 7, die mit ihrer Achse freidrehbar in einer Schlittenanordnung 8 gelagert ist, die mittels reibungsarmer Lager 9,10 oder dgl. in einer Schlittenführung 11,12 geführt ist, die aus zwei sich gegenüberliegenden U-förmigen Trägern besteht. Die insgesamt mit 6 bezeichnete Tänzeranordnung weist einen Betätigungsarm 13 auf, in dessen senkrechter Bewegungsbahn das bewegliche Element, z.B. der Schalthebel, eines Impulsschalters 14 angeordnet ist. Ferner steht die Tänzeranordnung 6 unter der Wirkung von Vorspannfedern 15. die hier als Zugfedern ausgebildet sind. deren unteres Ende bei 16 gestellfest verankert ist. Von der Tänzerrolle 7 läuft das Seil frei mit seinem Abschnitt 3b über eine zu der hinteren Umlenkrolle 2 parallele freidrehbare Umlenkrolle 5 oder Seilscheibe und von dort mit seinem Abschnitt 3d zu der gestellfest angeordneten Seiltrommel 17. Die Seiltrommel 17 weist, wie insbesondere aus Fig. 2 hervorgeht, einen eigentlichen Trommelkörper 18 auf, auf dessen einer Seite eine Schaltkupplung 26, z.B. eine durch Fluid betätigbare Mehrscheibenkupplung, angeordnet ist, die durch das Fluid eingerückt und durch Federkraft ausgerückt wird. Durch die Schaltkupplung 26 läßt sich der Trommelkörper 18 mit der Antriebswelle 25 kuppeln, die von einem Motor 19 angetrieben wird. An der anderen Stirnseite des Trommelkörpers 18 ist eine Bremse 27 angeordnet, die im dargestellten Beispiel eine Mehrscheibenbremse ist, die durch Federkraft angezogen und durch Fluid gelüftet wird.

An dem freien Ende des Seiles, dem Seilabschnitt 3c, ist ein Fallgewicht 4 angehängt. Durch die Tänzeranordnung 6 wird das Seil auf allen seinen Abschnitten 3a,3b,3d gestrafft gehalten. Dies gilt sowohl für den normalen Hub-und Senkbetrieb als auch für den Freifall-Schlagbetrieb. Für den letzteren ist in Fig. 1 die freie Fallhöhe des Gewichtes 4 mit 20 bezeichnet, wobei das Gewicht bei 4a in der Aufschlagstellung gezeigt ist. Mit 21 ist die Bodeneindringtiefe gezeigt, die bei jedem Schlag zugewonnen wird. Mit 4b ist die Lage des Schlaggewichtes 4 nach Beendigung des Schlages gezeigt.

Wie aus Fig. 2 hervorgeht, ist an die Stromquelle 40 ein Hauptschalter 41 angeschlossen, über den die Umstellung vom normalen Hebe-und Senkbetrieb auf den Freifall-Schlagbetrieb erfolgt. Dazu wird der Schalter 41 geschlossen, so daß über die Leitung 54 der Impulsschalter 14, der normalerweise offen ist, in den Stromkreis zwischen Pluspol 40 und Minuspol 53 einer Stromquelle eingeschaltet ist.

Aus Fig. 2 ist ersichtlich, daß für den Freifall-Schlagbetrieb die Bremse 27 über ein Druckregelventil 34 und die Leitung 35 mit Fluid von vorbestimmtem Druck beaufschlagt werden kann derart, daß durch eine Restbremskraft eingestellt eine gleichmäßig bleibende Zugkraft auf das Seil 3 ausgeübt werden kann. Das Druckregelventil 34 ist eingangsseitig mit einer Druckquelle 30 verbunden. Das bedeutet, daß das Seil 3 nicht nur beim Anheben des Schlaggewichtes 4 unter einer vorbestimmten Seilspannung steht, sondern daß auch eine deutliche Seilspannung während des freien Falles vorhanden ist, da das Gewicht 4 das Seil von der Trommel 18 gegen die Restbremskraft der Bremse abzieht. Die Kräfte und Spannungen sind so bemessen, daß während des Anhebens des Freifallgewichtes 4 durch die Seiltrommel 17 die Tänzeranordnung 6 gegen die Wirkung der Vorspannfedern 15 aus der in Fig. 1 gezeigten Stellung angehoben wird. Der Impulsschalter 14 ist also geöffnet. Die Seilspannung, die nach Beendigung des Anhebevorganges und während des freien Falles des Gewichtes 4 wirksam ist, reicht aber ebenfalls aus, um die Tänzeranordnung 6 in der zuvor angehobenen Stellung zu halten, so daß auch während des freien Falles der Impulsschalter 14 geöffnet bleibt. Erst wenn das Fallgewicht 4 auf den Boden auftrifft und in der Stellung 4b zur Ruhe kommt, entspannt sich das Seil so weit, daß das Gewicht der Tänzeranordnung 6 in Verbindung mit der Kraft der Federn 15 ausreicht, um die Tänzeranordnung nach unten zu bewegen, so daß der Betätigungsarm 13 auf das bewegliche Glied des Impulsschalters 14 trifft und den Impulsschalter 14 schließt. Dadurch wird gemäß Fig. 2 die Wicklung 43 eines Zeitrelais 42 in den Stromkreis eingeschaltet. Das Zeitrelais 42 zieht an und - schaltet um, so daß die beiden Relaiskontakte 44 und 45 mit den Kontakten 46 bzw. 47 verbunden werden. Gleichzeitig beginnt die einstellbare Zeitspanne zu laufen, für die das Zeitrelais 42 eingeschaltet bleibt. Da der Schalter 14 nach momentanem Schließen sofort öffnet, schaltet das Zeitrelais 42 einen Haltestromkreis ein. Über die Leitungen 54,55, die verbundenen Relaiskontakte 44,46, und die Leitung 60 wird die Wicklung 50 des Schaltrelais 48 erregt. Durch Schließen des Relais kontaktes 51,52 wird für die Wicklung 43 des Zeitrelais ein den Impulsschalter 14 umgehender Stromkreis mit den Leitungen 54,56,58,57 und die Relaiskontakte 51,52 bzw. 45,47 geschlossen.

Mit Anziehen des Relais 42 wird über die Leitung 59 auch die elektromagnetische Wicklung 37 eines Druckmittelschiebers 32 betätigt, der umschaltet und die Druckmittelquelle 30 über die Leitung 33 mit der Kupplung 26 verbindet. Mit Anziehen des Zeitrelais 42 wird somit auch die Druckmittelkupplung 26 betätigt, welche den Trommelkörper 18 mit der Welle 25 des Motors 19 kuppelt. Über das Seil 3 wird das Fallgewicht 4 somit aus der abgesenkten Stellung über die Fallhöhe 20 angehoben. Die Hubzeitdauer und damit die Hub-bzw. Fallhöhe werden bestimmt durch die Zeitspanne, für die das Zeitrelais 42 eingeschaltet ist. Diese Zeitspanne läßt sich variieren, so daß auch die Hub-bzw. Fallhöhe auf einfache Weise auf bestimmte Werte eingestellt werden kann.

Nach Ablauf der eingestellten Zeitspanne fällt das Zeitrelais 42 ab und unterbricht damit die zuvor beschriebenen Stromkreise. Dadurch schaltet das Ventil 32 zurück, so daß die Kupplung 26 zum Sumpf oder Tank 61 hin entspannt wird. Der Hubvorgang wird beendet, so daß nunmehr das Fallgewicht 4 fallen und dabei den Trommelkörper 18 gegen die voreingestellte Restbremskraft an der Bremse 27 abziehen kann. Erst wenn das Fallgewicht 4 in seine Ruhestellung 4b gelangt ist, wird über die Tänzeranordnung 6 der Impulsschalter 14 erneut kurzfristig geschlossen, so daß der beschriebene Vorgang sich wiederholt.

Soll zum normalen Hub-und Senkbetrieb übergegangen werden, so wird der Schalter 41 umgeschaltet, und es werden die Bremse 27 und Kupplung 26 über die sonst üblichen, in der Fig. 2 dünn schematisch dargestellten Steuerelemente und Steuerleitungen betätigt.

Sowohl die Kupplung als auch die Bremse können abweichend von dem Ausführungsbeispiel auch in anderer Weise, z.B. elektromagnetisch, mechanisch und/oder elektrisch betätigbar sein. Der Antrieb der Seiltrommel kann mit jedem geeigneten Motor, z.B. mit einem Elektromotor, einem Hydraulmotor oder einem Verbrennungsmotor er-folgen.

**Ansprüche**

1. Seilwinde für wahlweisen Hub-, Senk-und zyklischen Freifall-Schlagbetrieb mit einer über Schaltkupplung antreibbaren und über Bremse abbremsbaren Seiltrommel, **gekennzeichnet** durch einen auf die Seilspannung ansprechenden Fühler (7,15), der auf die Endspannung des Seiles (3) am Ende des Freifall-Bewegungsvorganges anspricht und die Schaltkupplung (26) der Seiltrommel (17) einrückt und einen Zeitgeber (42) auslöst, der die Schaltkupplung (26) nach Ablauf einer vorgegebenen Zeitspanne selbsttätig ausrückt.

2. Seilwinde nach Anspruch 1, **dadurch gekennzeichnet**, daß die Bremse (27) für den Freifall-Schlagbetrieb auf eine jeweils vorbestimmte Restbremskraft einstellbar ist.

3. Seilwinde nach Anspruch 1 oder 2, **dadurch gekennzeichnet**, daß die Kupplung (26) eine durch Druckfluid ein-und durch Federkraft ausrückbare Scheibenkupplung ist und der Fühler (7,15) ein elektromagnetisches Betätigungsventil (32) für die Schaltkupplung (26) steuert.

4. Seilwinde nach einem der Ansprüche 1 bis 3, **dadurch gekennzeichnet**, daß der Fühler eine zwischen der Seiltrommel (17) und einer Seilumlenkrolle (2) angeordnete Tänzerrolle (7) aufweist, deren Tänzerbahn ein durch die Tänzerrolle in eine vorbestimmte Stellung betätigbarer Impulsschalter (14) zur Betätigung der Schaltkupplung (26) und zur Auslösung des Zeitgebers (42) zugeordnet ist.

5. Seilwinde nach Anspruch 4. **dadurch gekennzeichnet**, daß der normalerweise offene Impulsschalter (14) im Speisestromkreis der Wicklung (43) eines Zeitrelais (42) angeordnet ist, über dessen Relaiskontakte (44 bis 47) ein Haltestromkreis (48, 50 bis 52) für das Zeitrelais sowie die elektromagnetische Betätigungswicklung (37) des Betätigungsventils (32) einschaltbar sind.

6. Seilwinde nach Anspruch 4 oder 5, **dadurch gekennzeichnet**, daß die Freifall-Höhe durch das stufenlos einstellbare Zeitrelais (42) auch während des Freifall-Schlagbetriebes veränderbar ist.

7. Seilwinde nach einem der Ansprüche 4 bis 6, **dadurch gekennzeichnet**, daß die Tänzerrolle (7) in einem zwangsweise geführten Schlitten (8 bis 10) gelagert ist, an dem eine den Schlitten in Richtung auf die den Impulsschalter (14) betätigende Stellung vorspannende Einrichtung (15,16) angreift.

8. Seilwinde nach Anspruch 7. **dadurch gekennzeichnet**, daß das Gewicht der Tänzeranordnung, bestehend aus Tänzerrolle (7) und Schlitten (8 bis 10), und die daran angreifende Vorspannkraft zusammen so bemessen sind, daß die Tänzeranordnung bei Betrieb der Seiltrommel (17) an gehoben, durch den abgebremsten Abzug des Seiles (3) von der Trommel (17) während des freien Falles in einer angehobenen Stellung gehalten und erst nach Beendigung des freien Falles zum vollständigen Absenken vom Seilzug automatisch freigegeben wird.

9. Seilwinde nach einem der Ansprüche 4 bis 8, **dadurch gekennzeichnet**, daß der Tänzeranordnung obere und untere Begrenzungsanschläge, insbesondere Anschläge mit Stoßdämpferwirkung, zugeordnet sind.

Fig 1

Fig 2

| | |
|---|---|
| ———— | = Hydro-Leitung |
| ⚡ | = Elektro-Leitung |